# EUROPÄISCHE PATENTSCHRIFT

(11) **EP 1 839 337 B1**
(45) Veröffentlichungstag und Bekanntmachung des Hinweises auf die Patenterteilung: **02.12.2009**
(21) Anmeldenummer: 06705820.6
(22) Anmeldetag: 19.01.2006
(51) Int. Cl.: H01L 27/15

(54) **BELEUCHTUNGSEINRICHTUNG**
LIGHTING DEVICE
DISPOSITIF D'ÉCLAIRAGE

(30) Priorität: 19.01.2005 DE 102005002709; 16.12.2005 DE 102005060382; 17.01.2006 DE 102006002275
(43) Veröffentlichungstag der Anmeldung: 03.10.2007
(73) Patentinhaber: OSRAM Opto Semiconductors GmbH, 93055 Regensburg (DE)
(72) Erfinder: BLÜMEL, Simon, 84069 Schierling (DE); OTT, Hubert, 93077 Bad Abbach (DE); PLÖTZ, Ludwig, 93473 Arnschwang (DE); WANNINGER, Mario, 93055 Harting/Regensburg (DE); KIRCHBERGER, Günter, 93161 Sinzing (DE); WOLFF, Peter, 93093 Donaustauf (DE); ZEILER, Markus, 93152 Nittendorf (DE)
(74) Vertreter: Lettenberger, Michael
(86) Internationale Anmeldenummer: PCT/DE2006/000082
(87) Internationale Veröffentlichungsnummer: WO 2006/076899

(56) Entgegenhaltungen:
- EP-A- 1 380 876
- EP-A2- 0 921 568
- EP-A2- 1 521 235
- WO-A-2004/031844
- WO-A-2006/040937
- WO-A2-2004/032235
- DE-U1- 20 007 730
- US-A1- 2004 218 388
- US-A1- 2004 262 623
- US-A1- 2005 001 537

## Beschreibung

Die Erfindung betrifft eine Beleuchtungseinrichtung mit einer strahlungsemittierenden Vorderseite und einer Vielzahl von Lichtquellen, die in Lichtquellengruppen unterteilt sind.

Eine Beleuchtungseinrichtung zur Hinterleuchtung von Displays ist beispielsweise in der Druckschrift WO 2004/031844 A1 beschrieben. Diese Beleuchtungseinrichtung umfasst zur Erzeugung von Licht mit einem weißen Farbeindruck einzelne farbige Lichtquellen, die so angeordneten sind, dass mischfarbiges Licht von der Vorderseite der Beleuchtungseinrichtung abgestrahlt wird. Weiterhin sind die primären Lichtquellen bei der Beleuchtungseinrichtung gemäß der Druckschrift WO 2004/031844 A1 so angeordnet, dass ihre Hauptabstrahlrichtung parallel zur Abstrahlrichtung der Beleuchtungseinrichtung verläuft und die verschiedenfarbigen Lichtquellen die zu hinterleuchtende Fläche daher direkt anstrahlen. Insbesondere bei Beleuchtungseinrichtungen dieser Bauart ist es jedoch schwierig die Abstrahlcharakteristik bezüglich Farbe und Intensität bei gleichzeitig flacher Bauweise zu homogenisieren.

In der Druckschrift WO 2004/032235 A2 ist eine Einrichtung zur Erzeugung eines gebündelten Lichtstroms angegeben.

Die Druckschrift US 2004/0128388 A1 betrifft ein Oberflächenleuchtelement und ein Flüssigkristalldisplay mit einem solchen Element.

In der Druckschrift EP 1 380 876 A1 ist ein Flüssigkristalldisplay mit farbselektiv reflektierenden Elementen offenbart.

In der Druckschrift EP 0 921 568 A2 ist eine LED-Leuchte beschrieben.

In der Druckschrift US 2005/0001537 A1 ist ein vielfarbig emittierendes LED-Array mit verbessertem Helligkeitsprofil und verbesserter Farbgleichförmigkeit angegeben.

Die Druckschrift DE 200 07 730 U1 betrifft eine Vorrichtung mit lichtemittierenden Dioden.

Eine Aufgabe der Erfindung ist es, eine Beleuchtungseinrichtung anzugeben, die besonders dünn ausgebildet werden kann und gleichzeitig eine möglichst homogene Abstrahlcharakteristik aufweist.

Diese Aufgabe wird durch eine Beleuchtungseinrichtung mit den Merkmalen des Patentanspruches 1 gelöst.

Vorteilhafte Ausführungsformen und Weiterbildungen der Beleuchtungseinrichtung sind in den abhängigen Ansprüchen angegeben.

Eine Beleuchtungseinrichtung mit einer strahlungsemittierenden Vorderseite umfasst insbesondere eine Vielzahl von Lichtquellen, die in Lichtquellengruppen unterteilt sind, wobei die Lichtquellengruppen auf den Gitterpunkten eines ersten regelmäßigen Gitters angeordnet sind.

Bevorzugt sind die Lichtquellengruppen gleichartig auf den Gitterpunkten des ersten regelmäßigen Gitters angeordnet. Besonders bevorzugt sind die Lichtquellengruppen mit ihren Schwerpunkten auf den Gitterpunkten des ersten Gitters angeordnet, d.h. dass die Schwerpunkte der Lichtquellengruppen zu den Gitterpunkten deckungsgleich sind. Mit "Schwerpunkt der Lichtquellengruppe" ist vorliegend der geometrische Schwerpunkt einer Lichtquellengruppe gemeint.

Bevorzugt sind die Radien der Umkreise der Lichtquellengruppen deutlich kleiner als der Abstand benachbarter Gitterpunkte oder als die Länge zumindest eines Gittervektors des ersten Gitters. Als Umkreis einer Lichtquellengruppe wird hierbei der kleinste mögliche Kreis bezeichnet, der die Lichtquellen einer Lichtquellengruppe vollständig umfasst. Bevorzugt beträgt das Verhältnis von Radius des Umkreises einer Lichtquellengruppe zum Abstand benachbarter Gitterpunkte bzw. zur Länge zumindest eines Gittervektors des ersten Gitters einen Wert zwischen 1:2 und 1:100, wobei die Grenzen eingeschlossen sind.

Durch solchermaßen gewählte Abstandsverhältnisse entsteht beim Betrachten der Gitteranordnung der Eindruck punktförmiger Lichtquellen in einer regelmäßigen Gitteranordnung. Im Falle von Lichtquellen verschiedener Farbe innerhalb einer Lichtquellengruppe entsteht auf diese Art und Weise eine weitestgehend homogene Farbmischung des Lichtes einer Lichtquellengruppe. Ist der Abstand zwischen den Lichtquellengruppen und der strahlungsemittierenden Vorderseite weiterhin geeignet gewählt, so wird durch eine Aufweitung des Lichtkegels der einzelnen Lichtquellengruppen eine weitestgehend homogene Hinterleuchtung erzeugt. Erfindungsgemäß beträgt der Abstand zwischen Lichtquellengruppen und strahlungsemittierender Vorderseite der Beleuchtungseinrichtung zwischen 10 mm und 100 mm , wobei die grenzen eingeschlossen sind. Besonders bevorzugt beträgt der Abstand zwischen Lichtquellengruppen und strahlungemittierender Vorderseite der Beleuchtungseinrichtung zwischen 20 mm und 50 mm.

Die Lichtquellen einer Lichtquellengruppe sind bevorzugt jeweils auf einem gemeinsamen Träger angeordnet. Dies bietet in der Regel die Möglichkeit Prozessabläufe bei der Herstellung zu vereinfachen. So können Herstellung und Montage der Lichtquellen vereinfacht werden, da jeweils in einem ersten Herstellungsschritt Module mit jeweils einer Lichtquellengruppe auf einem Träger hergestellt werden, die nachfolgend zu einer Beleuchtungseinrichtung verbaut werden, beispielsweise in dem sie auf einem weiteren Träger entsprechend dem vorgesehenen ersten regelmäßigen Gitter montiert werden.

Alternativ können auch mehrere Lichtquellengruppen gemeinsam auf einen Träger, beispielsweise in Form eines Streifens, montiert sein. Hierdurch verringert sich die Anzahl an Teilen, die bei der Herstellung der Beleuchtungseinrichtung montiert werden müssen. Allerdings verringern sich auch die Freiheitsgrade bei der Anordnung der einzelnen Lichtquellengruppen.

Als Träger für eine oder mehrere Lichtquellengruppe kann beispielsweise eine Metallkernplatine verwendet sein. Eine Metallkernplatine bietet den Vorteil, dass die zur elektrischen Kontaktierung notwendigen Leiterbahnen und Kontaktstellen einfach auf ihr integriert sein können.

Das erste regelmäßige Gitter weist beispielsweise eine Gitterstruktur auf, die hexagonal, rhombisch, rechteckig, quadratisch oder nach Art eines Parallelogramms ausgebildet ist. Besonders bevorzugt wird eine hexagonale Gitterstruktur verwendet. Diese Gitterstruktur kann durch Drehung um 60° um eine Rotationsachse, die senkrecht zu der Ebene steht, innerhalb derer die hexagonale Gitterstruktur ausgebildet ist, in sich selbst überführt werden. Sie weist daher eine sehr hohe Symmetrie auf und ist vorteilhafterweise geeignet, eine besonders homogene Abstrahlcharakteristik der Beleuchtungseinrichtung zu erzeugen.

Bei einer weiteren besonders bevorzugten Ausführungsform sind auch die Lichtquellen innerhalb einer Lichtquellengruppe jeweils auf den Gitterpunkten eines zweiten regelmäßigen Gitters angeordnet. Hierbei weist das zweite regelmäßige Gitter beispielsweise ebenfalls eine Gitterstruktur auf, die hexagonal, rhombisch, rechteckig, quadratisch oder nach Art eines Parallelogramms ausgebildet ist. Besonders bevorzugt wird ebenfalls eine hexagonale Gitterstruktur aufgrund ihrer hohen Symmetrie verwendet.

Bei dieser Ausführungsform sind die Lichtquellen bevorzugt mit dem Schwerpunkt ihrer Grundflächen auf den Gitterpunkten des zweiten Gitters angeordnet. Mit "Schwerpunkt der Lichtquelle" ist vorliegend der geometrische Schwerpunkt der Lichtquellen gemeint. Weiterhin ist es auch möglich, dass die optische Achse der Lichtquellen den jeweils zugehörigen Gitterpunkt des zweiten Gitters durchläuft.

Bei einer besonders bevorzugten Ausführungsform weisen das erste regelmäßige Gitter und das zweite regelmäßige Gitter die gleiche Gitterstruktur auf und besonders bevorzugt jeweils eine hexagonale Gitterstruktur. Auf diese Art und Weise kann eine weitestgehend homogene Beleuchtungsstärke jeweils einer Farbe innerhalb der zu beleuchtenden Fläche erzeugt werden. Werden gleichartige Lichtquellengruppen mit gleicher Zusammensetzung verwendet, so weisen jeweils benachbarte gleichfarbige Lichtquellen verschiedener Lichtquellengruppen gleiche Abstände zueinander auf, wenn sowohl das erste als auch das zweite regelmäßige Gitter eine hexagonale Struktur aufweisen. Aus diesen Gründen führt ein erstes regelmäßiges Gitter und ein zweites regelmäßiges Gitter mit einer hexagonalen Gitterstruktur vorteilhafterweise zu einer möglichst guten Durchmischung des Lichtes der Lichtquellen und insbesondere zu einer verbesserten Homogenität der Abstrahlcharakteristik der Beleuchtungseinrichtung hinsichtlich Farbe und Intensität.

Bevorzugt weist die Beleuchtungseinrichtung Lichtquellengruppen gleicher Zusammensetzung und gleicher Orientierung auf. Dadurch kann eine sehr gleichmäßige Ausleuchtung der zu beleuchtenden Fläche für unterschiedliche Farben erzielt werden.

Bei einer bevorzugten Ausführungsform umfasst eine Lichtquellengruppe Lichtquellen mit mindestens zwei unterschiedlichen Farben, da so mischfarbiges Licht erzeugt werden kann.

Bevorzugt sendet die Beleuchtungseinrichtung von ihrer Vorderseite mischfarbiges Licht mit einem Farbort im weißen Bereich der CIE-Normfarbtafel aus. Beleuchtungseinrichtungen, die Licht mit einem Farbort im weißen Bereich der CIE-Normfarbtafel aussenden, finden mit Vorteil in vielen Bereichen industrielle Anwendung, beispielsweise zur Hinterleuchtung von Displays, wie LCD-Displays.

Bevorzugt umfasst eine Lichtquellengruppe mindestens eine rote, mindestens eine grüne und mindestens eine blaue Lichtquelle und besonders bevorzugt eine einzige rote, zwei grüne und eine einzige blaue Lichtquelle, oder ein Mehrfaches der jeweiligen Anzahl, d.h. zwei rote, vier grüne und zwei blaue, drei rote, sechs grüne und drei blaue, usw. auf. Insbesondere eine Zusammenstellung von Rot/Grün/Blau im Verhältnis 1/2/1 innerhalb einer Lichtquellengruppe erlaubt es auf technisch einfache Weise, eine Beleuchtungseinrichtung mit einem ansprechenden weißen Farbeindruck zu erzeugen. Hierbei ist es auch möglich, dass mit einer roten, einer grünen und einer blauen Lichtquelle ein Verhältnis von 0,5/1/0,5 von Rot/Grün/Blau erzielt wird, etwa durch eine angepasste Bestromung der Lichtquellen. Die Anzahl der Lichtquellen muss also nicht notwendigerweise einem ganzzahligen Vielfachen des Verhältnisses 1/2/1 entsprechen, sondern die Beleuchtungsstärken der einzelnen Lichtquellen können entsprechend dem Verhältnis 1/2/1 angepasst sein.

Weiterhin kann eine Lichtquellengruppe auch eine oder mehrere Weißlichtquellen umfassen. Mittels solcher Weißlichtquellen kann beispielsweise die Grundhelligkeit der Beleuchtungseinrichtung variiert werden.

Bei einer zweckmäßigen Ausgestaltung der Erfindung weisen nicht alle Lichtquellengruppen dieselbe Zusammenstellung von verschiedenfarbigen Lichtquellen auf. Einzelne Lichtquellengruppen können beispielsweise zusätzliche Lichtquellen, beispielsweise, wie oben erwähnt, Weißlichtquellen aber auch Lichtquellen einer anderen Farbe enthalten. Hierdurch kann etwa erreicht werden, dass bestimmte Bereiche der Beleuchtungseinrichtung gezielt Licht einer anderen Farbe, eines anderen Farbtons und/oder einer anderen Helligkeit aussenden. Eine solche Beleuchtungseinrichtung kann beispielsweise zur Allgemeinbeleuchtung oder Stimmungsbeleuchtung eingesetzt werden.

Weiterhin kann die Helligkeit von Bereichen der Beleuchtungseinrichtung, die dunkler erscheinen als der Rest, weil sie beispielsweise durch andere Elemente der Beleuchtungseinrichtung abgeschattet sind, gezielt erhöht werden.

Es sei an dieser Stelle darauf hingewiesen, dass auch Lichtquellen anderer Farben und nicht nur rot, grün, blau und weiß in der Beleuchtungseinrichtung Verwendung finden können. Insbesondere bei Anwendungen zur Allgemeinbeleuchtung kann es je nach angestrebter Farbe des abgestrahlten Lichtes zweckmäßig sein, auch Lichtquellen anderer Farbe zu verwenden. Um Lichtquellen mit beliebiger Farbe zu erzeugen, können beispielsweise Konversionsstoffe in den Lichtquellen oder auch in anderen Elementen der Beleuchtungseinrichtung eingesetzt werden.

Bei einer Beleuchtungseinrichtung mit Lichtquellengruppen unterschiedlicher Zusammenstellung werden bevorzugt Lichtquellengruppen gleicher Zusammenstellung symmetrisch auf den Gitterpunkten des ersten regelmäßigen Gitters angeordnet, so dass die Lichtquellengruppen einer Zusammenstellung jeweils eine Art regelmäßiges Übergitter ausbilden. Auf diese Art und Weise kann vorteilhafterweise die Symmetrie des ersten regelmäßigen Gitters genutzt werden, um eine homogene Abstrahlcharakteristik zu erzeugen und weiterhin Helligkeit und Farbeindruck des von der Vorderseite der Beleuchtungseinrichtung abgestrahlten Lichtes variiert werden.

Bei der Beleuchtungseinrichtung gemäß der Erfindung sind die Lichtquellen bevorzugt so angeordnet, dass ihre optischen Achsen im Wesentlichen parallel zur Abstrahlrichtung der Beleuchtungseinrichtung angeordnet sind. Es handelt sich daher bei der Beleuchtungseinrichtung gemäß der vorliegenden Anmeldung bevorzugt um eine direkte Beleuchtungseinrichtung, bei der die Lichtquellen direkt die zu beleuchtende Fläche anstrahlen. Im Vergleich zu einer Beleuchtungseinrichtung, die einen oder mehrere Lichtleiter umfassen, in die seitlich das Licht der Lichtquellen eingekoppelt wird, kann eine solche direkte Beleuchtungseinrichtung besonders effizient und mit geringem Gewicht ausgeführt werden.

Die Lichtquellen der Beleuchtungseinrichtung weisen zur strahlungsemittierenden Vorderseite der Beleuchtungseinrichtung einen Abstand zwischen 10 mm und 100 mm auf, wobei die Grenzen eingeschlossen sind. Die Beleuchtungseinrichtung bietet vorteilhafterweise auch noch bei diesen geringen Abständen eine hohe Homogenität von Intensität und Farbe des von ihrer Vorderseite abgestrahlten Lichtes.

Vorteilhafterweise weist die Beleuchtungsstärke der Beleuchtungseinrichtung in der Regel an ihrer Vorderseite keine scharfen, vom Betrachter wahrnehmbare Kanten auf, die beispielsweise von den Strahlkegeln einzelner Lichtquellen oder Lichtquellengruppen herrühren könnten.

Gemäß einer weiteren Ausführungsform der Beleuchtungseinrichtung sind nicht alle Gitterpunkte des ersten Gitters mit Lichtquellengruppen besetzt, sondern beispielsweise nur jeder zweite oder jeder dritte. Somit kann die Symmetrie der Gitteranordnung mit ihren oben beschriebenen Vorteilen genutzt werden und gleichzeitig die Gesamthelligkeit der Beleuchtungseinrichtung variiert werden. Es ist auch denkbar, dass nur einzelne Teilbereiche der Beleuchtungseinrichtung nicht vollständig auf allen Gitterpunkten mit Lichtquellengruppen besetzt sind, beispielsweise falls eine laterale Variation der Helligkeitsverteilung auf der Vorderseite der Beleuchtungseinrichtung vorgesehen ist.

Bevorzugt werden bei der Beleuchtungseinrichtung organische Leuchtdioden (OLEDs), anorganische Halbleiterleuchtdioden (LEDs) oder Laserdioden (LDs) als Lichtquellen verwendet. Solche Lichtquellen bieten den Vorteil, dass sie in der Regel eine hohe Effizienz, geringen Energieverbrauch und eine kleine Bauform aufweisen.

Bei einer weiteren Ausführungsform der Beleuchtungseinrichtung sind die Lichtquellengruppen in einem Innenbereich des ersten regelmäßigen Gitters gleichartig zueinander orientiert.

Erfindungsgemäß sind Lichtquellengruppen in Randbereichen des ersten Gitters in dessen Ebene um einen gewissen Winkel verdreht zu den Lichtquellengruppen insbesondere im Innenbereich des ersten Gitters angeordnet. Das bedeutet, dass die Lichtquellen dieser verdrehten Lichtquellengruppen relativ zum zugehörigen Gitterpunkt anders angeordnet sind als die Lichtquellen der Lichtquellengruppen im Innenbereich. Besonders bevorzugt sind Lichtquellengruppen des Randbereiches um 90° gedreht zu den Lichtquellengruppen des Innenbereiches angeordnet.

Bei einer weiteren besonders bevorzugten Ausführungsform sind auch Lichtquellengruppen in Eckbereichen des ersten Gitters, die an Ecken der Beleuchtungseinrichtung angrenzen, in dessen Ebene um einen gewissen Winkel verdreht zu den Lichtquellengruppen insbesondere im Innenbereich des Gitters angeordnet. Diese gedrehten Lichtquellengruppen der Eckbereiche sind in der Regel um einen anderen Winkel gedreht zu den Lichtquellengruppen des Innenbereiches angeordnet als die Lichtquellengruppen des Randbereiches. Besonders bevorzugt sind Lichtquellengruppen der Eckbereiche um 45° zu den Lichtquellengruppen des Innenbereiches verdreht.

Bevorzugt sind die Lichtquellengruppen so angeordnet, dass sich beim Überfahren der dem Rand am nächsten liegenden Lichtquellengruppen eine periodische Abfolge der Lichtquellen verschiedener Farben ergibt. Auf diese Art und Weise wird auch die Ausleuchtung in Randbereichen der Beleuchtungseinrichtung insbesondere bezüglich ihrer Farbe homogenisiert.

Weitere Vorteile und vorteilhafte Ausführungsformen und Weiterbildungen der Erfindung ergeben sich aus den im Folgenden in Verbindung mit den Figuren 1A, 1B, 2A, 2B, 3 bis 5, 6A bis 6E und 7A bis 7C näher erläuterten Ausführungsbeispielen.

### Es zeigen:

Figur 1A, eine perspektivische, schematische Darstellung einer Beleuchtungseinrichtung gemäß einem ersten Ausführungsbeispiel,
Figur 1B, eine schematische Draufsicht auf einen Ausschnitt des linken oberen Bereiches der Beleuchtungseinrichtung gemäß Figur 1A,
Figur 2A, eine perspektivische, schematische Darstellung einer Beleuchtungseinrichtung gemäß einem zweiten Ausführungsbeispiel,
Figur 2B, eine schematische Draufsicht auf einen Ausschnitt des linken oberen Bereiches der Beleuchtungseinrichtung gemäß der Figur 2A,
Figur 3, eine schematische Draufsicht auf eine Beleuchtungseinrichtung gemäß einem dritten Ausführungsbeispiel,
Figur 4, eine perspektivische, schematische Darstellung einer Lichtquellengruppe gemäß einem vierten Ausführungsbeispiel,
Figur 5, eine schematische Darstellung einer Anordnung von Lichtquellengruppen auf den Gitterpunkten eines ersten regelmäßigen Gitters gemäß einem fünften Ausführungsbeispiel,
Figuren 6A bis 6E, schematische Darstellungen von Lichtquellengruppen gemäß fünf verschiedenen Ausführungsformen, und
Figuren 7A bis 7C, schematische Darstellungen von Gitterstrukturen gemäß drei verschiedener Ausführungsformen.

In den Ausführungsbeispielen und Figuren sind gleiche oder gleichwirkende Bestandteile jeweils mit den gleichen Bezugszeichen versehen. Die dargestellten Elemente und deren Größenverhältnisse sind grundsätzlich nicht als maßstabsgerecht anzusehen, vielmehr können einzelne Elemente, wie zum Beispiel Lichtquellen oder Lichtquellengruppen sowie Gitterstrukturen, zum besseren Verständnis und/oder zur besseren Darstellbarkeit übertrieben groß dargestellt sein.

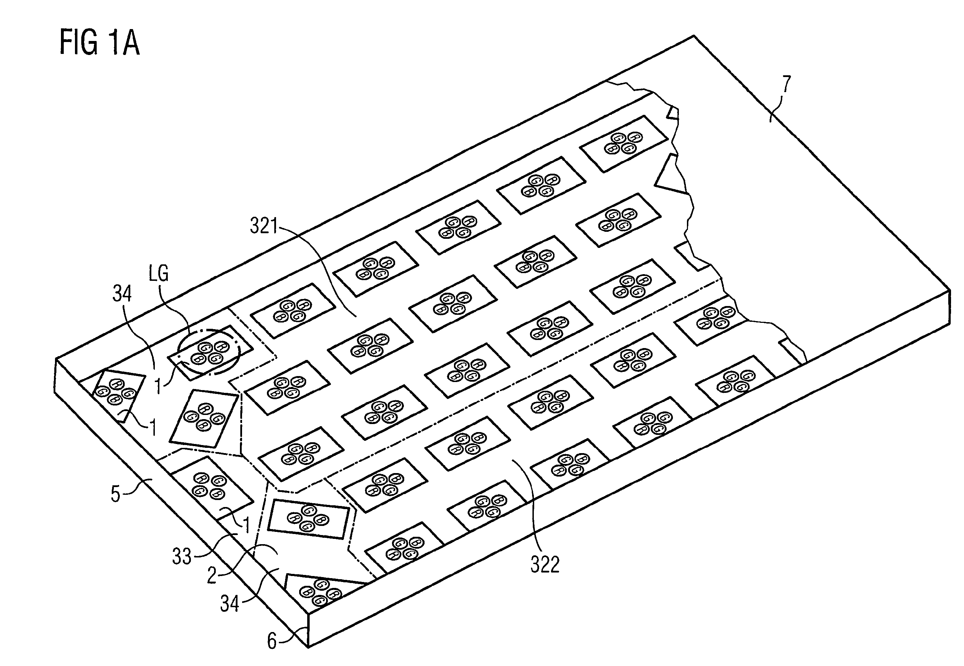

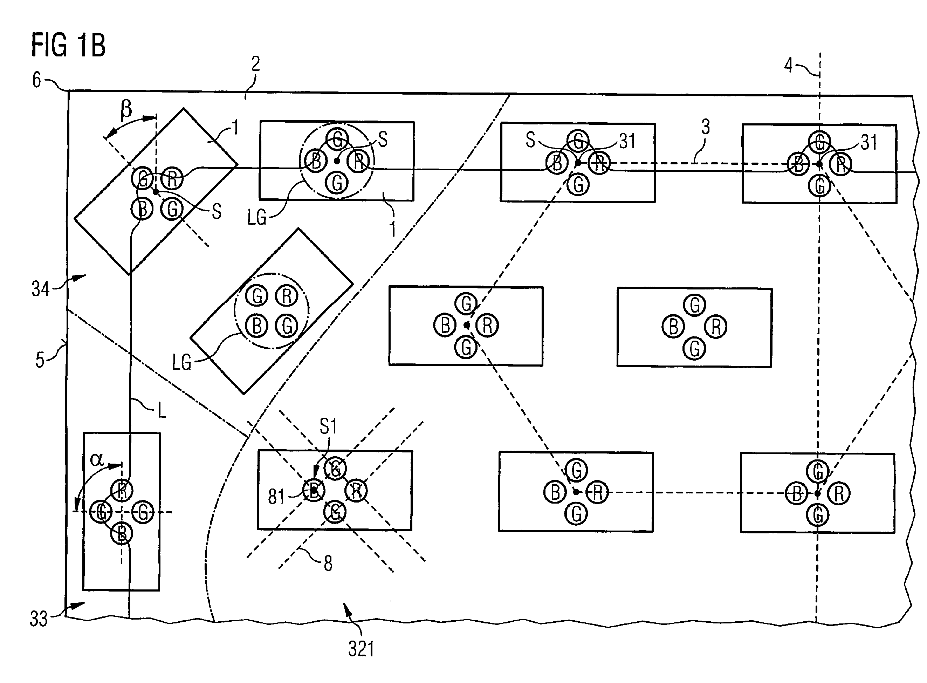

Die Beleuchtungseinrichtung gemäß dem Ausführungsbeispiel der Figuren 1A und 1B umfasst eine Vielzahl an Lichtquellen. Vorliegend sind als Lichtquellen Leuchtdioden (kurz "LED") verwendet. Es können jedoch auch andere Lichtquellen verwendet sein, beispielsweise organische Leuchtdioden oder Laserdioden.

Die Vielzahl an LEDs weist LEDs, die rotes Licht aussenden (im Folgenden "rote LEDs"), LEDs, die grünes Licht aussenden (im Folgenden "grüne LEDs"), und LEDs, die blaues Licht aussenden (Folgenden "blaue LEDs") auf. Rote LEDs, grüne LEDs und blaue LEDs sind im Folgenden mit den Bezugszeichen R, G bzw. B versehen.

Die Vielzahl an roten LEDs R, grünen LEDs G und blauen LEDs B ist in Lichtquellengruppen LG unterteilt, wobei jede Lichtquellengruppe eine rote LED R, zwei grüne LEDs G und eine blaue LED B aufweist. Jede Lichtquellengruppe LG ist auf einem separaten Träger 1 montiert, die jeweils auf einem demgegenüber größeren weiteren Träger 2, wie etwa einer Displayrückwand, angeordnet sind (siehe Figur 1A).

Die Lichtquellengruppen LG sind auf dem weiteren Träger 2 auf den Gitterpunkten eines ersten regelmäßigen Gitters 3 angeordnet, das vorliegend eine hexagonale Gitterstruktur aufweist. Weiterhin sind die Lichtquellengruppen LG mit ihren Schwerpunkten S jeweils auf den Gitterpunkten 31 des ersten regelmäßigen Gitters 3 angeordnet, wie beispielsweise in Figur 1B dargestellt.

Weiterhin sind die LEDs R, G, B einer Lichtquellengruppe LG auf den Gitterpunkten eines zweiten regelmäßigen Gitters 8 angeordnet, das vorliegend ebenfalls eine hexagonale Gitterstruktur aufweist.

In einem ersten Innenbereich 321 und einem zweiten Innenbereich 322 des ersten regelmäßigen Gitters 3 sind Lichtquellengruppen LG jeweils so angeordnet, dass ihre Lichtquellen gleiche Orientierung zueinander aufweisen, dass heißt, dass die Lichtquellen LG relativ zu ihrem Gitterpunkt die gleiche Position aufweisen. Dies resultiert beispielsweise darin, dass mehrere LEDs gleicher Farbe R, G, B innerhalb einer der Innenbereiche 321, 322 auf einer gemeinsamen Geraden 4 angeordnet sind. Es resultiert weiterhin darin, dass Lichtquellen LG gleicher Farbe auf den Gitterpunkten eines gemeinsamen regelmäßigen Gitters angeordnet sind, das die gleichen Gitterkonstanten aufweist, wie das erste regelmäßige Gitter und verschoben zu diesem angeordnet ist.

In einem Randbereich 33 und einem Eckbereich 34 des ersten regelmäßigen Gitters 3, der an eine Seitenfläche 5 der Beleuchtungseinrichtung angrenzt, sind die Lichtquellengruppen LG um gewisse Winkel α, β gedreht zu den Lichtquellengruppen LG des ersten Innenbereiches 321 angeordnet.

So sind jeweils zwei Lichtquellengruppen LG, die sich in den Eckbereichen 34 des Gitters befinden, jeweils gegenüber den Lichtquellengruppen LG des ersten Innenbereiches 321 um einen Winkel β=45°, bei dem in Figur 1B dargestellten an die obere rechte Ecke der Beleuchtungseinrichtung grenzenden Eckbereich 34 gegen den Uhrzeigersinn, gedreht. In den weiteren Eckbereichen 34 des ersten regelmäßigen Gitters, von denen einer in Figur 1A zu sehen ist, sind die Lichtquellengruppen ebenfalls um einen Winkel β=45° gedreht zu den Lichtquellengruppen des ersten Innenbereiches 321 angeordnet, allerdings jeweils derart, dass die Drehung zu den Ecken der Beleuchtungseinrichtung erfolgt.

Die zwischen diesen beiden um 45° gedrehten Lichtquellengruppen LG positionierte, Lichtquellengruppe LG des Randbereiches 33 ist weiterhin gegenüber den Lichtquellengruppen LG des ersten Innenbereiches 321 um einen Winkel α=90° gegen den Uhrzeigersinn gedreht.

Die gedrehte Positionierung der Lichtquellengruppen LG ist jeweils derart, dass je eine LED einer Farbe R, G, B aus einer Lichtquellengruppe LG direkt zu den Seitenflächen 5 der Beleuchtungseinrichtung weist und diese im Wesentlichen ohne Abschattung durch andere Lichtquellen R, G, B ungehindert beleuchtet.

Durch die gedrehte Positionierung der Lichtquellengruppen der Randbereiche 33 und der Eckbereiche 34 sind bei der Beleuchtungseinrichtung der Figur 1A alle randseitigen Lichtquellengruppen LG derart positioniert, dass jeweils eine rote R, eine grüne G und eine blaue LED B benachbart zu den Seitenflächen 5 der Beleuchtungseinrichtung angeordnet sind. Die Lichtquellengruppen LG sind also so angeordnet, dass sich beim Überfahren der dem Rand am nächsten liegenden Lichtquellengruppen entlang der Linie L eine periodische Abfolge der Lichtquellen verschiedener Farben ergibt.

Dies verbessert vorteilhafterweise die Homogenität der Ausleuchtung der Randbereiche 33 und der Eckbereiche 34 der Beleuchtungseinrichtung.

Die lichtemittierende Vorderseite 7 der Beleuchtungseinrichtung ist beispielsweise durch eine strahlungsdurchlässige Platte, wie beispielsweise eine milchig weiße Platte oder eine Diffusorplatte, etwa aus Kunststoff gebildet. Es kann auch eine transparente Platte als lichtemittierende Vorderseite 7 verwendet werden, die strukturiert oder bedruckt ist, um das Licht der Lichtquellen zu streuen.

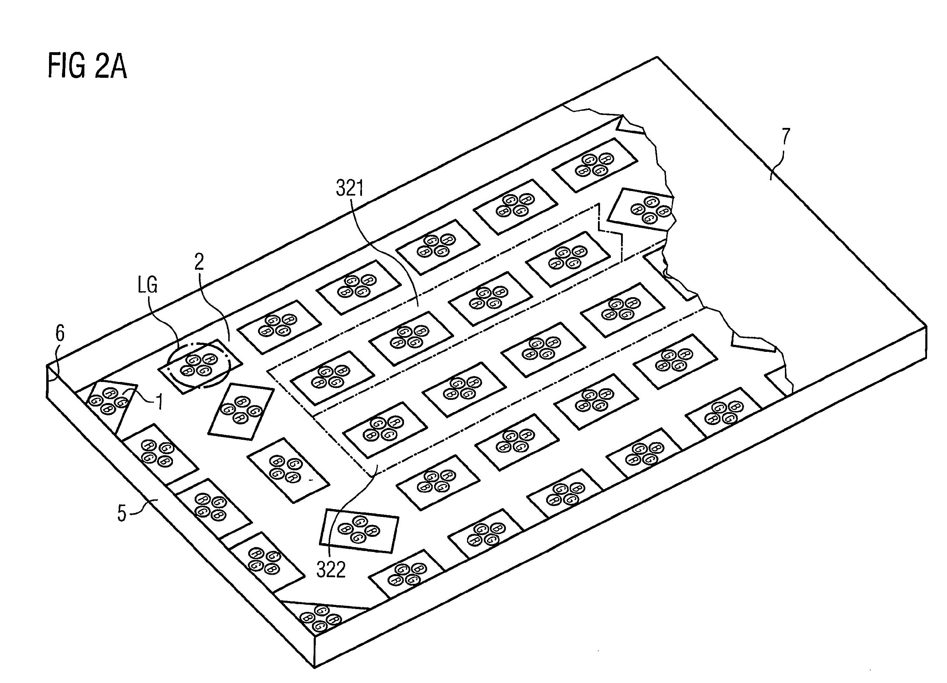

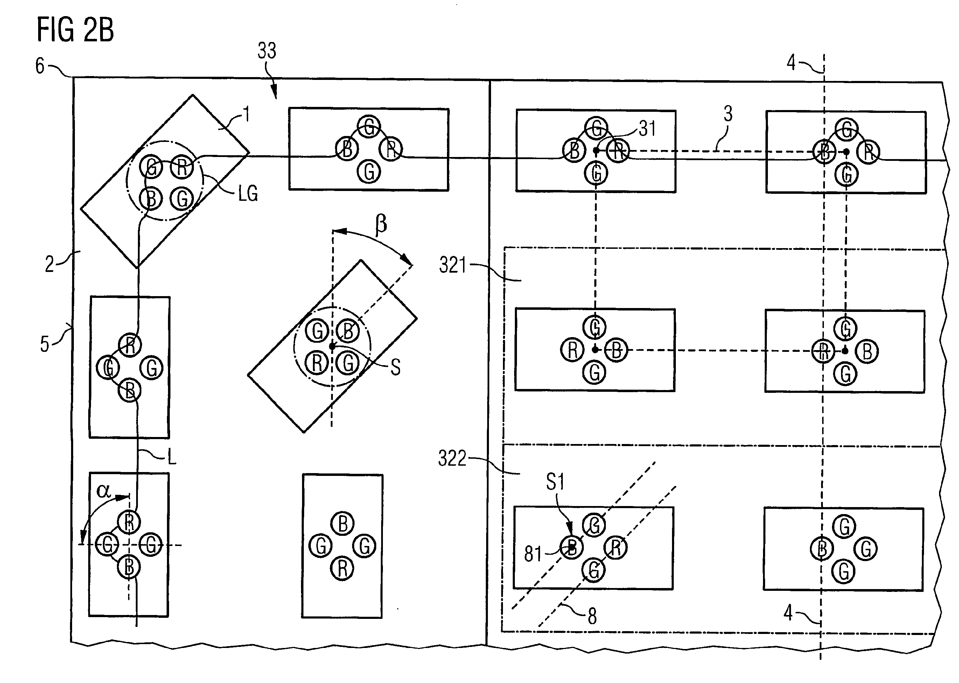

Im Unterschied zu der Beleuchtungseinrichtung gemäß dem Ausführungsbeispiel der Figuren 1A und 1B sind die Lichtquellengruppen LG bei dem Ausführungsbeispiel gemäß den Figuren 2A und 2B auf den Gitterpunkten eines ersten regelmäßigen Gitters 3 angeordnet, das eine rechteckige Gitterstruktur aufweist. Eine Lichtquellengruppe LG ist wie bei dem Ausführungsbeispiel gemäß der Figuren 1A und 1B aus einer roten R, zwei grünen G und einer blauen LED B zusammengesetzt. Weiterhin sind die Lichtquellengruppen LG bei dem Ausführungsbeispiel gemäß der Figuren 2A und 2B wie bei dem Ausführungsbeispiel gemäß der Figuren 1A und 1B auf den Gitterpunkten 81 eines zweiten regelmäßigen Gitters 8 mit hexagonaler Gitterstruktur angeordnet, wobei vorliegend die Mittelpunkte bzw. die Schwerpunkte S1 der Grundflächen der LEDs R, G, B, jeweils auf einem Gitterpunkt 81 des zweiten regelmäßigen Gitters 8 zu liegen kommen.

Auch bei der Beleuchtungseinrichtung der Figuren 2A und 2B sind die Lichtquellengruppen LG eines ersten Innenbereiches 321 des ersten regelmäßigen Gitters 8 so angeordnet, dass sie gleiche Orientierung zu ihren zugehörigen Gitterpunkten aufweisen und mehrere LEDs R, G, B einer Farbe verschiedener Lichtquellengruppen LG durch gemeinsame Geraden 4 miteinander verbunden werden können.

Weiterhin sind auch bei der Beleuchtungseinrichtung gemäß der Figuren 2A und 2B Lichtquellengruppen LG in Randbereichen 33 und Eckbereichen 34 der Beleuchtungseinrichtung um einen Winkel α bzw. β gedreht zu den Lichtquellengruppen LG des ersten Innenbereiches 321 positioniert. Die Lichtquellengruppen LG in dem Eckbereich 34 des ersten regelmäßigen Gitters 3, der in Figur 2B zu sehen ist, sind um einen Winkel β=45° gegen den Uhrzeigersinn gegenüber den Lichtquellengruppen LG des ersten Innenbereiches 321 gedreht, während die in Figur 2B dargestellten, direkt zu der Seitenfläche 5 der Beleuchtungseinrichtung weisenden Lichtquellengruppe LG des Randbereiches 33 um einen Winkel α=90° gegen den Uhrzeigersinn gedreht gegenüber den Lichtquellengruppen LG des ersten Innenbereiches 321 orientiert sind. Eine direkt an eine solche randseitige Lichtquellengruppe LG benachbart angeordnete Lichtquellengruppe LG ist weiterhin gegenüber den Lichtquellengruppen LG des ersten Innenbereiches 321 um einen Winkel α=90° im Uhrzeigersinn gedreht.

Auch bei dem Ausführungsbeispiel gemäß den Figuren 2A und 2B sind die Lichtquellengruppen LG, die dem Rand der Beleuchtungseinrichtung direkt benachbart sind so angeordnet, dass sich beim Überfahren der dem Rand am nächsten liegenden Lichtquellengruppen LG entlang der Linie L eine periodische Abfolge der Lichtquellen verschiedener Farben ergibt.

Wie in Figur 2A gezeigt sind die Lichtquellengruppen in einem zweiten Innenbereich 322 um 180° gedreht zu den Lichtquellengruppen des ersten Innenbereiches 321 angeordnet. Diese Anordnung führt bei der vorliegenden rechteckigen Gitterstruktur des ersten regelmäßigen Gitters zu einer besonders homogenen Ausleuchtung.

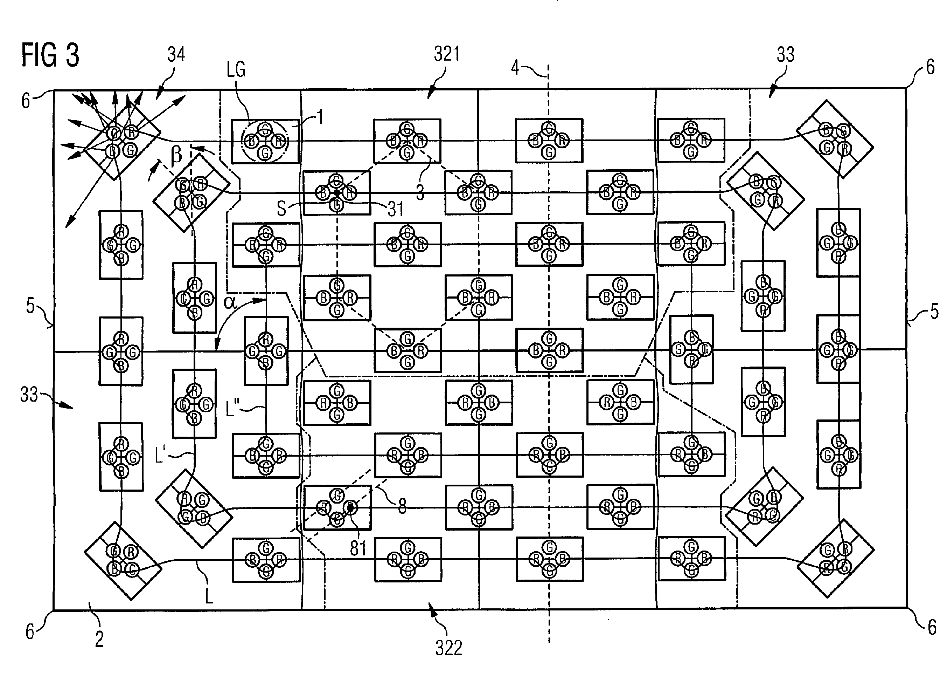

Bei dem Ausführungsbeispiel gemäß Figur 3 sind die Lichtquellengruppen LG ebenfalls wie bei den beiden Ausführungsbeispielen gemäß der Figuren 1A und 1B sowie 2A und 2B in einem ersten hexagonalen Gitter 3 und die Lichtquellen R, G, B einer Lichtquellengruppe LG ebenfalls auf den Gitterpunkten 81 eines zweiten, regelmäßigen Gitters 8 mit hexagonaler Gitterstruktur angeordnet.

In einem ersten Innenbereich 321 und einem zweiten Innenbereich 322 des ersten regelmäßigen Gitters 3 sind die Lichtquellengruppen LG wiederum zueinander jeweils in der gleichen Orientierung angeordnet, während Lichtquellengruppen LG in den Randbereichen 33, die jeweils an eine Seitenfläche 5 der Beleuchtungseinrichtung angrenzen, um einen Winkel α gedreht zu den Lichtquellengruppen LG des ersten Innenbereiches 321 positioniert sind. Auch Lichtquellen der Eckbereiche 34, sind um einen weiteren Winkel β gedreht zu den Lichtquellengruppen LG des ersten Innenbereiches 321 angeordnet.

So sind jeweils zwei Lichtquellengruppen LG der Eckbereiche 34 um einen Winkel β=45° gegenüber den Lichtquellengruppen LG des ersten Innenbereiches 321 des ersten regelmäßigen Gitters 3 gedreht.

Die Lichtquellengruppen LG innerhalb des zu den Seitenflächen 5 weisenden Randbereiches 33, der vorliegend von diesen um einen Winkel β=45° gedrehten Lichtquellengruppen LG der Eckbereiche 34 abgetrennt ist, sind weiterhin um einen Winkel α=90° gegen den Uhrzeigersinn gegenüber den Lichtquellengruppen LG im ersten Innenbereich 321 des ersten regelmäßigen Gitters 3 angeordnet. Auf diese Art und Weise sind jeweils die äußersten Lichtquellengruppen LG, die direkt benachbart zu den Seitenflächen 5 angeordnet sind, so positioniert, dass das Licht jeder Farbe der Lichtquellengruppe LG mit möglicht geringer Abschattung den Rand ausleuchtet. In einem zweiten Innenbereich 321 des ersten regelmäßigen Gitters sind die Lichtquellengruppen um 180° gedreht zu den Lichtquellengruppen des ersten Innenbereiches 321 angeordnet. Die Drehung der Lichtquellengruppen in den einzelnen Bereichen des ersten regelmäßigen Gitters führt bei der Beleuchtungseinrichtung der Figur 3 vorteilhafterweise dazu, dass nicht nur die dem Rand direkt benachbarten Lichtquellen mit einer Linie L verbunden werden können, wobei die Lichtquellen verschiedener Farben eine periodische Abfolge aufweisen, sondern auch die restlichen Lichtquellen auf Linie L', L'', die versetzt zu der Linie L entlang dem Rand der Beleuchtungseinrichtung verlaufen, eine periodische Abfolge an Farben aufweist. Die Anordnung der LEDs R, G, B gemäß Figur 3 führt vorteilhafterweise zu einer möglichst gleichmäßigen Abstrahlcharakteristik der gesamten Vorderseite 7 der Beleuchtungseinrichtung. Vorliegend beträgt die Homogenität der Beleuchtungsstärke an der Vorderseite vorteilhafterweise über 85%. Das bedeutet, dass das Verhältnis aus minimaler Leuchtdichte und maximaler Leuchtdichte über 0,85 beträgt. Die minimale und die maximale Leuchtdichte der Vorderseite 7 werden in Regel aus mehreren Messungen der Leuchtdichte gemittelt über Teilflächen der Vorderseite 7 mit einigen mm² Fläche ermittelt.

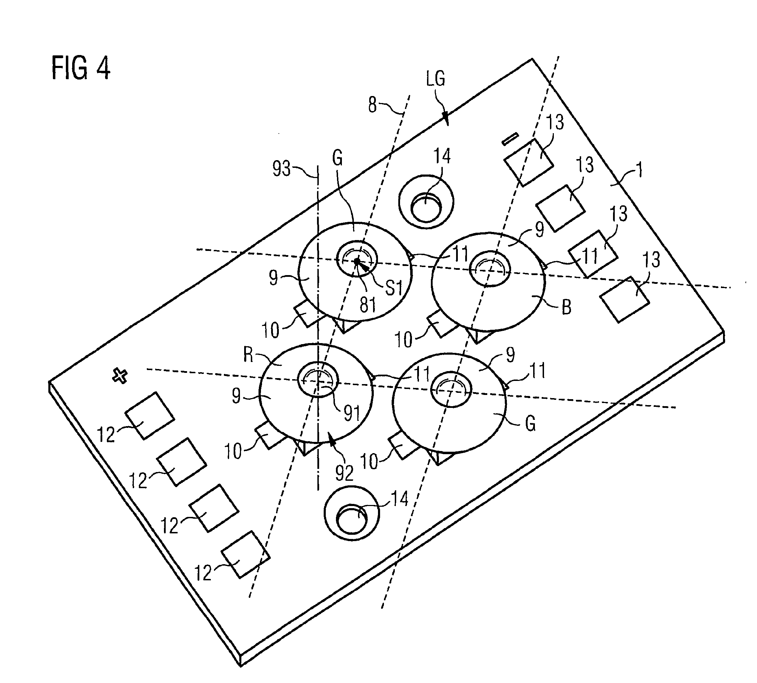

In Figur 4 ist eine Lichtquellengruppe LG beispielhaft näher dargestellt, wie sie bei den Beleuchtungseinrichtungen der Figuren 1A und 1B, 2A und 2B und 3 verwendet sind. Diese umfasst zwei grüne LEDs G, eine rote LED R und eine blaue LED B. Vorliegend sind LEDs als Lichtquellen verwendet, die eine Linse 9 zur Strahlformung umfassen. Diese Linse 9 weist einen konkav gekrümmten Teilbereich 91 auf, der von einem konvex gekrümmten Teilbereich 92 vollständig umlaufen wird. Weiterhin ist die Oberfläche der Linse 9 rotationssymmetrisch zu ihrer optischen Achse 93 ausgebildet. Weiterhin umfassen die LEDs R, G, B einen strahlungsemittierenden Leuchtdiodenchip (in der Figur nicht dargestellt), der bevorzugt zentriert zu der optischen Achse 93 der Linse 9 angeordnet ist. Die Linse 9 ist dazu geeignet, die Abstrahlcharakteristik eines Leuchtdiodenchips derart zu formen, dass die LED eine von der Linse 9 beabstandete Fläche sehr homogen ausleuchtet. Daher sind die LEDs R, G, B der Lichtquellengruppe LG gemäß Figur 4 besonders für eine Beleuchtungseinrichtung geeignet, die eine möglichst homogene Abstrahlcharakteristik aufweisen soll.

Die LEDs R, G, B der Leuchtdiodengruppe LG gemäß der Figur 4 sind auf einem Träger 1, vorliegend einer Metallkernplatine montiert, beispielsweise mittels selektivem Löten oder einem elektrisch leitfähigen Kleber. Seitlich der LEDs R, G, B sind jeweils zwei Kontaktbereiche 10, 11 angeordnet, die mit Kontaktbereichen 12, 13 auf der Platine 1 mittels Leiterbahnen (in der Figur nicht dargestellt) elektrisch leitend verbunden sind. Die Kontaktbereiche 12, 13 der Platine 1 sind in seitlichen Randbereichen des Trägers 1 angeordnet, wobei die Kontaktbereiche 12 auf der einen Seite der Pllatine 1 als Anode (in der Figur mit + gekennzeichnet) und die Kontaktbereiche 13 auf der anderen Seite des Trägers 1 als Kathode (in der Figur mit - gekennzeichnet) dienen.

Weiterhin weist der Träger 1 der Lichtquellengruppe LG zwei Bohrungen 14 auf, die dafür vorgesehen sind, Passstifte aufzunehmen, um das Leuchtdiodenmodul gemäß Figur 4 auf dem weiteren Träger 2 zu montieren.

Die LEDs R, G, B der Lichtquellengruppe LG gemäß der Figur 4 sind auf den Gitterpunkten 81 eines zweiten regelmäßigen Gitters 8 angeordnet, das eine hexagonale Gitterstruktur aufweist. Vorliegend sind die LEDs R, G, B jeweils so auf einem Gitterpunkt 81 des zweiten regelmäßigen Gitters 8 angeordnet, dass die optischen Achsen der Linse und damit die optischen Achsen der LEDs die Gitterpunkte des zweiten Gitters durchlaufen. Da bei den vorliegenden LEDs aufgrund ihrer Rotationssymmetrie die optische Achse ebenfalls den geometrischen Schwerpunkt ihrer Grundflächen durchläuft, sind die LEDs bei dem Ausführungsbeispiel der Figur 4 mit den Schwerpunkten auf den Gitterpunkten des zweiten regelmäßigen Gitters positioniert.

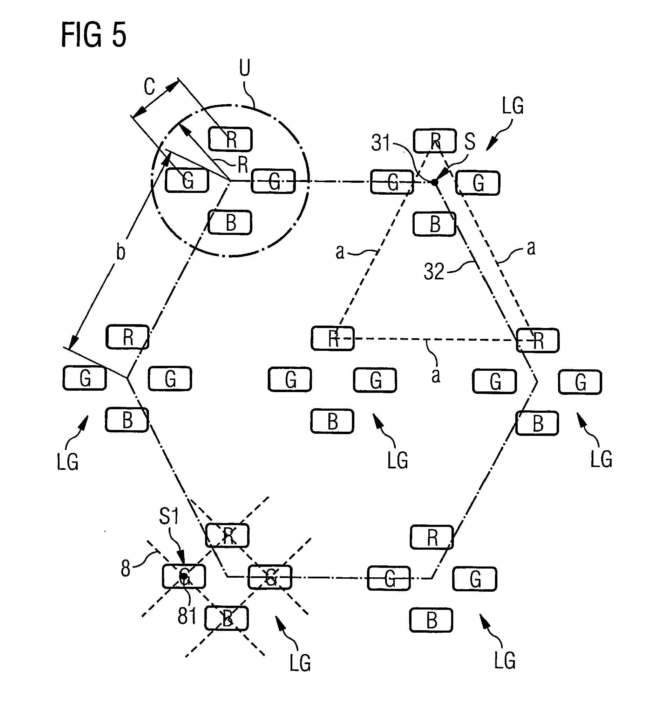

Figur 5 zeigt ein weiteres Ausführungsbeispiel eines ersten regelmäßigen Gitters 3 mit hexagonaler Gitterstruktur. Auf den Gitterpunkten 31 der hexagonalen Gitterstruktur ist jeweils eine Lichtquellengruppe LG angeordnet, wobei der Schwerpunkt S der Lichtquellengruppe LG auf einem Gitterpunkt 81 zu liegen kommt.

Die Lichtquellengruppen LG gemäß der Figur 5 weisen wiederum eine rote Lichtquelle R, zwei grüne Lichtquellen G und eine blaue Lichtquelle B auf. Diese sind auf den Gitterpunkten 81 eines zweiten regelmäßigen Gitters 8 angeordnet, das vorliegend wie das erste regelmäßige Gitter 3 eine hexagonale Gitterstruktur aufweist. Die Schwerpunkte S1 der Lichtquellen R, G, B kommen hierbei ebenfalls auf den Gitterpunkten 81 des zweiten regelmäßigen Gitters 8 zu liegen. Weiterhin weisen die Lichtquellengruppen LG zueinander die gleiche Orientierung auf. Daher ist eine Anordnung gemäß Figur 5 beispielsweise geeignet, in Innenbereichen 321, 322 einer Beleuchtungseinrichtung, wie sie in den Figuren 1A und 2B, 2A und 2B, sowie 3 dargestellt sind, verwendet zu sein.

Da sowohl das erste regelmäßige Gitter 3 als auch das zweite regelmäßige Gitter 8 eine hexagonale Gitterstruktur aufweisen, weisen jeweils Lichtquellen R, G, B jeweils direkt benachbarter Lichtquellengruppen LG einer Farbe die gleichen Abstände a zueinander auf.

Es sei an dieser Stelle darauf hingewiesen, dass die Abstände zwischen Gitterpunkten 31 des ersten Gitters 3 in den Figuren schematisch verkürzt dargestellt sind, um die Darstellung zu erleichtern. Bevorzugt sind die Gitterstrukturen des ersten und des zweiten Gitters 3, 8 jedoch so ausgebildet, dass die Abstände zwischen einzelnen Lichtquellengruppen LG deutlich größer sind als die Abstände zwischen einzelnen Lichtquellen R, G, B einer Lichtquellengruppe LG. Dies äußert sich beispielsweise darin, dass der jeweilige Umkreis U einer Lichtquellengruppe LG einen deutlich kleineren Radius R aufweist, als der Abstand b zwischen direkt benachbarten Gitterpunkten 31 des ersten regelmäßigen Gitters 3. So beträgt bei dem Ausführungsbeispiel der Figur 5 der Abstand b zweier direkt benachbarter Lichtquellengruppen LG zwischen 30 mm und 100 mm, während der Abstand c zwischen einzelnen Lichtquellen R, G, B einer Lichtquellengruppe LG zwischen 10 mm und 20 mm liegt und der Radius R des Umkreises U einer Lichtquellengruppe LG einen Wert zwischen 30 mm und 40 mm aufweist. Der Abstand zwischen den Lichtquellen und der strahlungsemittierenden Vorderseite (in der Figur nicht gezeigt), beträgt vorliegend zwischen 40 mm und 50 mm.

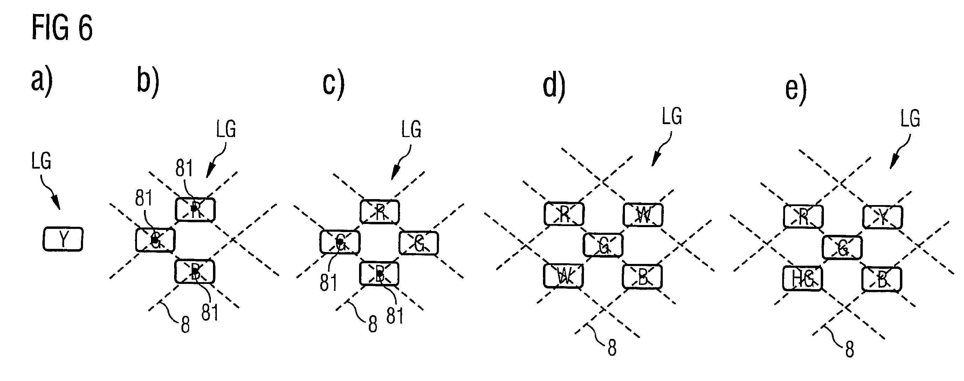

Figur 6 zeigt in den Figurenteilen A bis E unterschiedliche Ausführungsformen von Lichtquellengruppe LG, wie beispielsweise bei den Beleuchtungseinrichtungen gemäß der Figuren 1A, 1B, 2A, 2B und 3, sowie der Gitterstruktur gemäß der Figur 5 verwendet sein können.

Die Lichtquellengruppe LG gemäß dem Ausführungsbeispiel der Figur 6A umfasst eine einzige Lichtquelle Y, beispielsweise eine LED, die Licht aus dem gelben Spektralbereich aussendet. Es ist auch denkbar, dass es sich bei dieser Lichtquelle um eine LED handelt, die weißes Licht aussendet. Eine solche LED kann beispielsweise Konversionsstoffe umfassen, die Strahlung des Halbleiterkörpers der LED zumindest teilweise in Licht einer anderen Wellenlänge umwandelt, so dass weißes Licht erzeugt wird. So kann der Halbleiterkörper der LED etwa blaues Licht aussenden, das teilweise mittels Konversionsstoffen in gelbes Licht umgewandelt wird, so dass die LED weißes Licht aussendet. LEDs mit Konversionsstoffen sind beispielsweise in den Druckschriften WO 97/50132 und WO 98/12757 beschrieben, deren Offenbarungsgehalt hiermit diesbezüglich durch Rückbezug aufgenommen wird.

Bei der Lichtquellengruppe LG gemäß dem Ausführungsbeispiel der Figur 6B sind weiterhin jeweils eine rote R, eine grüne G und eine blaue LED B zu einer Lichtquellengruppe LG zusammengefasst, die auf Gitterpunkten 81 eines zweiten regelmäßigen Gitters 8 mit hexagonaler Gitterstruktur angeordnet sind.

Die Lichtquellengruppe LG gemäß Figur 6C umfasst gegenüber der Lichtquellengruppe LG der Figur 6B eine weitere grüne LED G, die einer weiteren Gitterpunkt 81 des zweiten regelmäßigen Gitters 8 mit hexagonaler Gitterstruktur besetzt.

Bei der Lichtquellengruppe LG gemäß Figur 6D sind eine rote R, eine grüne G und eine blaue LED B sowie zwei weiße LEDs W zu einer Lichtquellengruppe LG zusammengefasst. Auch diese Lichtquellen R, G, B sind auf einem zweiten hexagonalen Gitter 8 angeordnet, wobei die rote R, die grüne G und die blaue LED B auf einer gemeinsamen Geraden angeordnet sind und die beiden weißen LEDs W zu der roten R beziehungsweise zu der blauen LED B benachbarte Gitterplätze 81 des zweiten Gitters 8 besetzen.

Bei der Lichtquellengruppe LG gemäß Figur 6E sind ebenfalls eine rote R, eine grüne G und eine blaue LED B verwendet, die auf einer gemeinsamen Geraden eines zweiten regelmäßigen Gitters 8 mit hexagonaler Gitterstruktur angeordnet sind. Im Unterschied zu der Lichtquellengruppe LG gemäß Figur 6D sind die zu der roten R und der blauen LED B benachbarten Gitterplätze 81 des zweiten Gitters 8 mit einer gelben Y sowie mit einer hellgrünen Leuchtdiode HG belegt. Auf diese Art und Weise kann ein anderer Farbeindruck erzeugt werden als beispielsweise mit den LEDs gemäß Figur 6D.

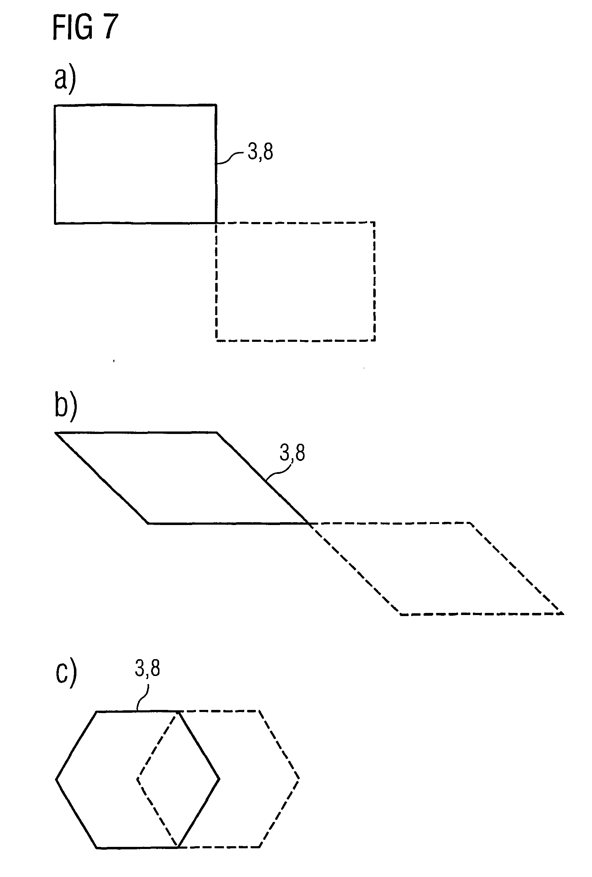

In den Figuren 7A bis 7C sind beispielhaft Gitter 3, 8 mit verschiedener Gitterstruktur dargestellt, die beispielsweise als erstes und/oder zweites Gitter 3, 8 verwendet sein können. Figur 7A zeigt eine rechteckige Gitterstruktur während Figur 7B eine Gitterstruktur nach Art eines Parallelogramms und Figur 7C eine hexagonale Gitterstruktur darstellen.

## Patentansprüche

1. Beleuchtungseinrichtung mit einer strahlungsemittierenden Vorderseite und einer Vielzahl von Lichtquellen (R, G, B), die in Lichtquellengruppen (LG) unterteilt sind, wobei die Lichtquellengruppen (LG) auf den Gitterpunkten eines ersten regelmäßigen Gitters (3) angeordnet sind, und wobei die Lichtquellengruppen (LG) in Eckbereichen (34) des ersten Gitters (3) um einen gewissen Winkel (β) gedreht zu den Lichtquellengruppen (LG) in Innenbereichen (321, 322) des ersten Gitters (3) angeordnet sind und bei der ein Abstand zwischen den Lichtquellen (R, G, B) und der strahlungsemittierenden Vorderseite zwischen 10 mm und 100 mm beträgt, wobei die Grenzen eingeschlossen sind.

2. Beleuchtungseinrichtung nach Anspruch 1, bei der die Schwerpunkte (S) der Lichtquellengruppen (LG) auf den Gitterpunkten (31) des ersten Gitters (3) angeordnet sind.

3. Beleuchtungseinrichtung nach einem der obigen Ansprüche, bei der die Lichtquellen (R, G, B) einer Lichtquellengruppe (LG) jeweils auf einem gemeinsamen Träger (1) angeordnet sind.

4. Beleuchtungseinrichtung nach einem der obigen Ansprüche, bei der das erste regelmäßige Gitter (3) eine Gitterstruktur aufweist, die hexagonal, rhombisch, rechteckig, quadratisch oder nach Art eines Parallelogramms ausgebildet ist.

5. Beleuchtungseinrichtung nach einem der obigen Ansprüche, bei der die Lichtquellen (R, G, B) einer Lichtquellengruppe (LG) auf den Gitterpunkten eines zweiten regelmäßigen Gitters (8) angeordnet sind.

6. Beleuchtungseinrichtung nach einem der obigen Ansprüche, bei der das zweite regelmäßige Gitter (8) eine Gitterstruktur aufweist, die hexagonal, rhombisch, rechteckig, quadratisch oder nach Art eines Parallelogramms ausgebildet ist.

7. Beleuchtungseinrichtung nach einem Ansprüche 5 bis 6, bei der das erste regelmäßige Gitter (3) und das zweite regelmäßige Gitter (8) die gleiche Gitterstruktur aufweisen.

8. Beleuchtungseinrichtung nach einem der obigen Ansprüche, bei der eine Lichtquellengruppe (LG) Lichtquellen (R, G, B) mit mindestens zwei unterschiedlichen Farben umfasst.

9. Beleuchtungseinrichtung nach einem der obigen Ansprüche, bei der eine Lichtquellengruppe (LG) eine rote (R), eine grüne (G) und eine blaue Lichtquelle (B) umfasst.

10. Beleuchtungseinrichtung nach einem der obigen Ansprüche, die von der strahlungsemittierenden Vorderseite mischfarbiges Licht mit einem Farbort im weißen Bereich der CIE-Normfarbtafel aussendet.

11. Beleuchtungseinrichtung nach einem der obigen Ansprüche, bei der als Lichtquellen (R, G, B) organische Leuchtdioden, Halbleiterleuchtdioden oder Laserdioden verwendet sind.

12. Beleuchtungseinrichtung nach einem der obigen Ansprüche, bei der die Lichtquellengruppen in einem Innenbereich (321, 322) des ersten regelmäßigen Gitters gleichartig zueinander angeordnet sind.

13. Beleuchtungseinrichtung nach einem der obigen Ansprüche, bei der die Lichtquellengruppen (LG) in Randbereichen (33) des ersten Gitters (3) um einen weiteren gewissen Winkel (α) gedreht zu den Lichtquellengruppen (LG) in Innenbereichen (321, 322) des ersten Gitters (3) angeordnet sind.

14. Beleuchtungseinrichtung nach Anspruch 13, bei der die Lichtquellengruppen (LG) in Randbereichen um 90° gedreht zu den Lichtquellengruppen (LG) in Innenbereichen (32) des ersten Gitters (3) angeordnet sind.

15. Beleuchtungseinrichtung nach einem der vorhergehenden Ansprüche, bei der die Lichtquellengruppen (LG) in Eckbereichen (34) um 45° gedreht zu den Lichtquellengruppen (LG) in Innenbereichen (321, 322) des ersten Gitters (3) angeordnet sind.

16. Beleuchtungseinrichtung nach einem der Ansprüche 8 bis 15, bei der die dem Rand am nächsten liegenden Lichtquellengruppen (LG) so angeordnet sind, dass sich beim Überfahren dieser Lichtquellengruppen (LG) entlang einer Linie (L) eine periodische Abfolge der Lichtquellen verschiedener Farben ergibt.

## Claims

1. Illumination device comprising a radiation-emitting front side and a multiplicity of light sources (R, G, B) subdivided into light source groups (LG), wherein the light source groups (LG) are arranged on the lattice points of a first regular lattice (3), and wherein the light source groups (LG) in corner regions (34) of the first lattice (3) are arranged in a manner rotated by a certain angle (β) with respect to the light source groups (LG) in inner regions (321, 322) of the first lattice (3), and wherein a distance between the light sources (R, G, B) and the radiation-emitting front side is between 10 mm and 100 mm, inclusive of the limits.

2. Illumination device according to Claim 1, wherein the centroids (S) of the light source groups (LG) are arranged on the lattice points (31) of the first lattice (3).

3. Illumination device according to any of the preceding claims, wherein the light sources (L, G, B) of a light source group (LG) are in each case arranged on a common carrier (1).

4. Illumination device according to any of the preceding claims, wherein the first regular lattice (3) has a lattice structure embodied as hexagonal, rhomboidal, rectangular, square or in the manner of a parallelogram.

5. Illumination device according to any of the preceding claims, wherein the light sources (R, G B) of a light source group (LG) are arranged on the lattice points of a second regular lattice (8).

6. Illumination device according to any of the preceding claims, wherein the second regular lattice (8) has a lattice structure embodied as hexagonal, rhomboidal, rectangular, square or in the manner of a parallelogram.

7. Illumination device according to any of Claims 5 to 6, wherein the first regular lattice (3) and the second regular lattice (8) have the same lattice structure.

8. Illumination device according to any of the preceding claims, wherein a light source group (LG) comprises light sources (R, G, B) having at least two different colours.

9. Illumination device according to any of the preceding claims, wherein a light source group (LG) comprises a red (R), a green (G) and a blue light source (B).

10. Illumination device according to any of the preceding claims, which emits from the radiation-emitting front side mixed-coloured light with a colour locus in the white region of the CIE standard chromaticity diagram.

11. Illumination device according to any of the preceding claims, wherein organic light-emitting diodes, semiconductor light-emitting diodes or laser diodes are used as light sources (R, G, B).

12. Illumination device according to any of the preceding claims, wherein the light source groups in an inner region (321, 322) of the first regular lattice are arranged in identical fashion with respect to one another.

13. Illumination device according to any of the preceding claims, wherein the light source groups (LG) in edge regions (33) of the first lattice (3) are arranged in a manner rotated by a further certain angle (α) with respect to the light source groups (LG) in inner regions (321, 322) of the first lattice (3).

14. Illumination device according to Claim 13, wherein the light source groups (LG) in edge regions are arranged in a manner rotated by 90° with respect to the light source groups (LG) in inner regions (32) of the first lattice (3).

15. Illumination device according to any of the preceding claims, wherein the light source groups (LG) in corners regions (34) are arranged in a manner rotated by 45° with respect to the light source groups (LG) in inner regions (321, 322) of the first lattice (3).

16. Illumination device according to any of Claims 8 to 15, wherein the light source groups (LG) lying closest to the edge are arranged in such a way as to result in a periodic sequence of the light sources of different colours when passing over these light source groups (LG) along a line (L).

## Revendications

1. Dispositif d'éclairage comprenant un côté avant émetteur de rayonnement et une pluralité de sources de lumière (R, G, B) qui sont divisées en groupes de sources de lumière (LG), les groupes de sources de lumière (LG) étant disposés sur les points de grille d'une première grille régulière (3) et les groupes de sources de lumière (LG) étant disposés dans les zones de coin (34) de la première grille (3), pivotés selon un certain angle (β) par rapport aux groupes de sources de lumière (LG) dans des zones intérieures (321, 322) de la première grille (3) et dans lequel un écart entre les sources de lumière (R, G, B) et le côté avant émetteur de rayonnement étant compris entre 10 mm et 100 mm, les limites étant incluses.

2. Dispositif d'éclairage selon la revendication 1, dans lequel les barycentres (S) des groupes de sources de lumière (LG) sont disposés sur les points de grille (31) de la première grille (3).

3. Dispositif d'éclairage selon l'une des revendications ci-dessus, dans lequel les sources de lumière (R, G, B) d'un groupe de sources de lumière (LG) sont respectivement disposées sur un support (1) commun.

4. Dispositif d'éclairage selon l'une des revendications ci-dessus, dans lequel la première grille régulière (3) présente une structure de grille qui est de forme hexagonale, rhombique, rectangulaire, carrée ou de type parallélogramme.

5. Dispositif d'éclairage selon l'une des revendications ci-dessus, dans lequel les sources de lumière (R, G, B) d'un groupe de sources de lumière (LG) sont disposées sur les points de grille d'une deuxième grille régulière (8).

6. Dispositif d'éclairage selon l'une des revendications ci-dessus, dans lequel la deuxième grille régulière (8) présente une structure de grille qui est de forme hexagonale, rhombique, rectangulaire, carrée ou de type parallélogramme.

7. Dispositif d'éclairage selon l'une des revendications 5 à 6, dans lequel la première grille régulière (3) et la deuxième grille régulière (8) présentent la même structure de grille.

8. Dispositif d'éclairage selon l'une des revendications ci-dessus, dans lequel un groupe de sources de lumière (LG) comprend des sources de lumière (R, G, B) ayant au moins deux couleurs différentes.

9. Dispositif d'éclairage selon l'une des revendications ci-dessus, dans lequel un groupe de sources de lumière (LG) comprend une source de lumière rouge (R), une verte (G) et une bleue (B).

10. Dispositif d'éclairage selon l'une des revendications ci-dessus, qui émet de la lumière aux couleurs mélangées par le côté avant émetteur de rayonnement avec une position chromatique dans la zone blanche du tableau chromatique normalisé CIE.

11. Dispositif d'éclairage selon l'une des revendications ci-dessus, dans lequel des diodes électroluminescentes organiques, des diodes électroluminescentes à semiconducteur ou des diodes laser sont utilisées comme sources de lumière (R, G, B).

12. Dispositif d'éclairage selon l'une des revendications ci-dessus, dans lequel les groupes de sources de lumière sont disposés de manière régulière les uns par rapport aux autres dans une zone intérieure (321, 322) de la première grille régulière.

13. Dispositif d'éclairage selon l'une des revendications ci-dessus, dans lequel les groupes de sources de lumière (LG) sont disposés dans les zones de bordure (33) de la première grille (3), pivotés selon un autre angle donné (α) par rapport aux groupes de sources de lumière (LG) dans des zones intérieures (321, 322) de la première grille (3).

14. Dispositif d'éclairage selon la revendication 13, dans lequel les groupes de sources de lumière (LG) sont disposés dans les zones de bordure, pivotés de 90° par rapport aux groupes de sources de lumière (LG) dans des zones intérieures (32) de la première grille (3).

15. Dispositif d'éclairage selon l'une des revendications précédentes, dans lequel les groupes de sources de lumière (LG) sont disposés dans les zones de coin (34), pivotés de 45° par rapport aux groupes de sources de lumière (LG) dans des zones intérieures (321, 322) de la première grille (3).

16. Dispositif d'éclairage selon l'une des revendications 8 à 15, dans lequel les groupes de sources de lumière (LG) qui sont les plus proches du bord sont disposés de telle sorte qu'en franchissant ces groupes de sources de lumière (LG) le long d'une ligne (L), on obtient une séquence périodique des sources de lumière de différentes couleurs.
